(19) Europäisches Patentamt
European Patent Office
Office européen des brevets

(11) **EP 1 530 300 B1**

(12) **EUROPEAN PATENT SPECIFICATION**

(45) Date of publication and mention
of the grant of the patent:
**31.01.2007 Bulletin 2007/05**

(51) Int Cl.:
*H04B 1/707* (2006.01)    *H04L 27/01* (2006.01)
*H04L 25/03* (2006.01)

(21) Application number: **04256704.0**

(22) Date of filing: **29.10.2004**

(54) **Method and apparatus for equalisation in a receiver of a cdma communications system**

Verfahren und Vorrichtung zur Entzerrerung in einem Empfänger eines CDMA Systems

Procédé et dispositif d'égalisation dans un récepteur d'un système AMRC

(84) Designated Contracting States:
**DE FR GB**

(30) Priority: **10.11.2003   US 703500**

(43) Date of publication of application:
**11.05.2005   Bulletin 2005/19**

(73) Proprietor: **LUCENT TECHNOLOGIES INC.**
**Murray Hill, New Jersey 07974-0636 (US)**

(72) Inventors:
• **Mailaender, Laurence E.**
**New York, NY 10014 (US)**
• **Proakis, John G.**
**Andover, MA 01810 (US)**

(74) Representative: **Sarup, David Alexander et al**
**Lucent Technologies EUR-IP UK Ltd**
**Unit 18, Core 3**
**Workzone**
**Innova Business Park**
**Electric Avenue**
**Enfield, EN3 7XB (GB)**

(56) References cited:
**WO-A-02/15505**          **US-A1- 2003 035 469**

• **SMEE J E ET AL: "Adaptive feedforward/ feedback detection architectures for wideband CDMA" COMMUNICATION THEORY MINI-CONFERENCE, 1999 VANCOUVER, BC, CANADA 6-10 JUNE 1999, PISCATAWAY, NJ, USA, IEEE, US, 6 June 1999 (1999-06-06), pages 151-157, XP010351126 ISBN: 0-7803-5653-5**

**Description**

**BACKGROUND OF THE INVENTION**

In CDMA cellular systems such as UMTS, user data is transmitted using multiple orthogonal codes. For example, user data from K sources, $b_k$, are assigned spreading sequences, $s_k$, and are transmitted as a composite signal over a dispersive channel, **h** (e.g., an air interface). Such a time-dispersive multipath channel spanning a single chip or more causes two distinct types of degradation: code-to-code interference due to loss of orthogonality among the codes (MAI), as well as ordinary intersymbol interference (ISI). The impact of ISI can be significant in high-speed data transmissions such as HSDPA where the number of chips per symbol is only 16.

Both of the above-described degradations can be handled by chip-level linear equalization at the receiver. The linear equalizer precedes a despreading operation for each source. A remarkable property of the chip-level equalizer is that only a single equalizer is needed to correct all the spreading codes. To further improve system capacity, it would be desirable to use decision-feedback equalization at the chip level. However, as the chip SNR is extremely low, and the composite signal has an extremely large constellation, decisions on individual chips are unreliable. To overcome this, it has been previously proposed to use hypothesis-feedback, in which several equalizers are run in parallel, each conditioned on a possible data symbol hypothesis. While this can be very effective for reducing the ISI of a single user, it is extremely complex if all the hypotheses for all K users are included, as would be necessary in the downlink. For example, in a QPSK system with 16 spreading codes, there are $4^{16} = 4.3 \times 10^9$ possible hypotheses.

**Frank et al. (US 2003/035469 A1)** discloses an invention that provides linear minimum mean square error equalization with parallel interference cancellation for symbol determination in a forward link of a CDMA communication system, which has a plurality of code channels in use. The disclosed method linearly filters a received signal to form a first filter signal, despreads and demodulates the first filtered signal, and provides a plurality of symbol estimates for all corresponding code channels. An estimated transmitted signal is generated from a plurality of symbol estimates, and with a channel estimate, to create a filtered estimated transmitted signal. A residual signal is determined as a difference between the received signal and the estimated received, signal, which is linearly filtered, and then combined with the estimated transmitted signal to form an enhanced estimated transmitted signal. This estimated transmitted signal is despread and utilized to provide a next plurality of symbol estimates, for a selected code channel of the plurality of code channels, for subsequent use in error correction and decoding.

**Kambiz et al. (WO 02/15505A)** discloses a pre-filter for an equalizer having adjustable filter coefficients and computationally efficient methods for computing the filter coefficients for a pre-filter in a decision feedback equalizer, which uses a fast Toeplitz algorithm. The disclosed equalizer operates in two modes, a training mode and a trapping mode. The training mode allows the receiver to estimate an initial set of filter coefficients used when the receiver begins receiving user data. During the training mode the processor estimates the impulse response of the communication channel and, based on the estimate of the channel impulse response, generates a system of linear equations that can be solved to determine the filter coefficients. The present invention seeks to amplify the operations for finding the filter coefficients by taking advantage of the structural characteristics of the channel.

**Smee et al. ("Adaptive feedforward/feedback detection architectures for wideband CDMA")** discloses a reverse link detector that suppresses multiple access interference and intersymbol interference using a feedforward filter which linearly processes a sample at the output of a set of parallel chip matched filters, and a feedback filter which linearly processes detected symbols. The disclosed architecture involves sharing the content of the feedforward filter and feedback filter among users to enable efficient multi-user recursive least-squares adaptation towards the minimum mean square error coefficients.

**Summary of the Invention**

A method and apparatus according to the present invention are set out in the independent claim, to which the reader is now referred. Preferred features are laid out in the dependent claims.

**SUMMARY OF THE INVENTION**

In the method and apparatus for receiver processing of CDMA signals, linear equalization of at least one received signal is followed by non-linear symbol estimation of each symbol stream in the received signal. In an exemplary embodiment, the linear equalization takes place at the chip level of the received signal (e.g., prior to despreading), and the symbol estimation takes place at the symbol level of the received signal (e.g., after despreading). An approximation of the original received signal formed from the estimated symbol streams is then filtered. In an embodiment of the present invention, this filtering takes place at the chip level of the received signal, and the output from this filtering represents the influence of at least one of past and future chips on a current chip of the received signal. The output from this filtering is combined with output from filtering of the received signal to produce the equalized received signal.

As will be described in detail with respect to the embodiments of the present invention, the present invention is applicable to single input, single output (SISO) communication systems; multiple input, multiple output (MIMO or BLAST) communication systems, transmit diversity communication systems, etc.

## BRIEF DESCRIPTION OF EXEMPLARY EMBODIMENTS

The present invention will become more fully understood from the detailed description given herein below and the accompanying drawings which are given by way of illustration only, wherein like reference numerals designate corresponding parts in the various drawings, and wherein:

Fig. 1 illustrates an exemplary embodiment of an apparatus for receiver processing according to the present invention;
Fig. 2 illustrates another embodiment of the present invention in which filter taps are adaptively determined;
Fig. 3 illustrates an embodiment of a MIMO system according to the present invention;
Fig. 4 illustrates an embodiment of the symbol estimation structure in the embodiment of Fig. 3; and
Fig. 5 illustrates an embodiment of the receiver processing structure according to the present invention for a transmit diversity system.

## DETAILED DESCRIPTION OF EXEMPLARY EMBODIMENTS

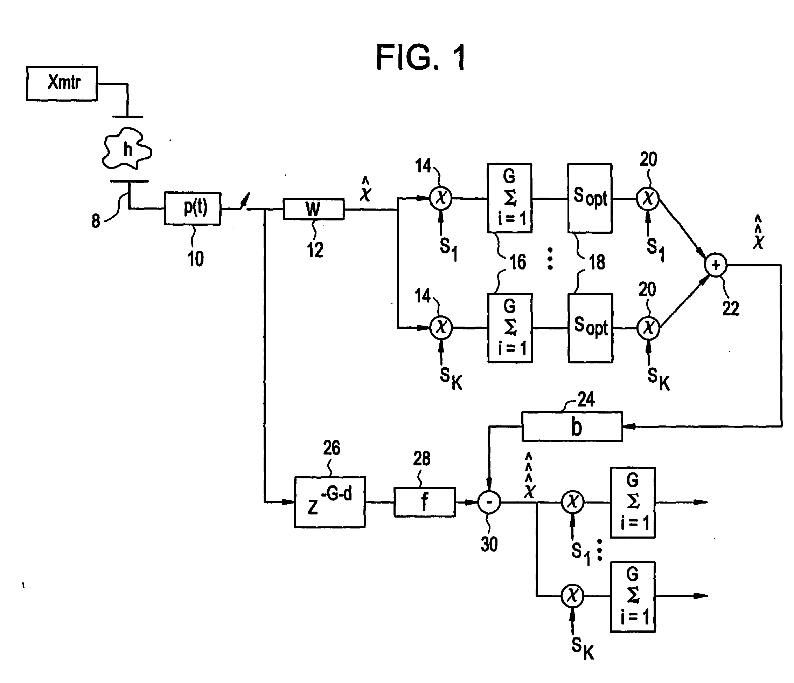

Fig. 1 illustrates an exemplary embodiment of an apparatus for receiver processing according to the present invention. As shown, a sampler 10 samples the chips of a signal received by an antenna 8 to generate a received signal. In one exemplary embodiment, the sampler 10 oversamples the chips such that at least two samples per chip are obtained. A linear equalizer 12 processes the received signal to produce a linear equalized signal. The linear equalization performed by the linear equalizer is conducted according to any well-known linear equalization algorithm. The linear equalized signal is despread by mixing the linear equalized signal with the respective spreading codes $s_1, ..., s_k$ at mixers 14. Accumulators 16 associated with the mixers 14 accumulate the despread chips produced by the mixers 14. A symbol estimator 18 associated with each accumulator 16 performs a non-linear, soft-estimation of symbols in the output stream from the accumulator 16. For example, each symbol estimator 18 is an optimal conditional-mean estimator that obtains soft estimates of the individual symbols. The estimated symbol streams are respread by mixers 20 and combined at an adder 22 to produce an approximation $\hat{\hat{x}}$ of the original chip sequence $\hat{x}$. This sequence of "correct" chip decisions is used as the input to a feedback filter 24.

As will be described in detail below, the feedback filter 24 generates an output representing the influence past and future chips have on a current chip in the received signal. A delay 26 delays the received signal, and a feedforward filter 28 filters the received signal. In an exemplary embodiment, the delay 26 delays the received signal by an amount of time to generate the linear equalization signal and despread, detect and respread the linear equalization signal. This allows the symbol estimators 18 to make symbol decisions based on future chips and the feedback filter 24 may generate an output representing the influence past and future chips have on a current chip in the received signal output by the feedforward filter 28. As will be appreciated, the embodiment of the present invention may be arranged such that the feedback filter 24 produces output representing the influence of only past chips on a current chip. A second combiner 30 subtracts the output of the feedback filter 24 from the output of the feedforward filter 28 to produce estimates of the current chips in the received signal with the detrimental influence of past and future chips suppressed and/or removed. The processed received signal output from the second combiner 30 may then be spread and accumulated as shown in Fig. 1 to produce the individual symbol streams. As will be described in detail below, the feedback filter 24 and the feedforward filter 28 are co-generated using a process resembling decision-feedback-equalization.

Let FF denote the number of chips in the feedforward filter 28, FB the number in the feedback filter 24, and P the over-sampling factor of the sampler 10. The vector of received samples contained in the feedforward filter is,

$$\begin{bmatrix} \mathbf{r}_p(k) \\ \mathbf{r}_p(k-1) \\ \vdots \\ \mathbf{r}_p(k-FF+1) \end{bmatrix} = \begin{bmatrix} \mathbf{h}_0 & \mathbf{h}_1 & \cdots & \mathbf{h}_{L-1} & \mathbf{0} & \cdots & \mathbf{0} \\ \mathbf{0} & \mathbf{h}_0 & \mathbf{h}_1 & \cdots & \mathbf{h}_{L-1} & \cdots & \mathbf{0} \\ & \ddots & \ddots & \ddots & & & \\ & & \ddots & \ddots & \ddots & & \\ \mathbf{0} & \cdots & \mathbf{0} & \mathbf{h}_0 & \mathbf{h}_1 & \cdots & \mathbf{h}_{L-1} \end{bmatrix} \begin{bmatrix} x(k) \\ x(k-1) \\ \vdots \\ \vdots \\ x(k-FF-L+2) \end{bmatrix} + \begin{bmatrix} \mathbf{n}_p(k) \\ \mathbf{n}_p(k-1) \\ \vdots \\ \vdots \\ \mathbf{n}_p(k-FF-L+2) \end{bmatrix}$$

$$(0.1)$$

or,

$$\mathbf{r}_k = \Gamma(\mathbf{h})\mathbf{x}_k + \mathbf{n}_k \qquad (0.2)$$

where $\mathbf{r}_k$ is the vector of received samples, $\Gamma(\mathbf{h})$ represents L echoes (multipath delay distortion) of a channel for each received sample, $\mathbf{x}_k$ is the kth transmitted sample, and $\mathbf{n}_k$ is the noise for sample k.

Let f(i) and b(i) denote the i-th feedforward and feedback tap, respectively. The estimate of the chip value at delay d is,

$$\hat{x}(k-d) = \sum_{i=0}^{FF-1} \mathbf{f}(i)^T \mathbf{r}(k-i) - \sum_{j=1}^{FB} b(j)x(k-d-j) - \sum_{q=1}^{d} b(-q)x(k-d+q) \quad (0.3)$$

with terms corresponding to the feedforward, causal feedback and anti-causal feedback sections. The MMSE (Minimum Mean Squared Error) tap weights are found from the solution of,

$$\mathbf{c}_{opt} = \arg \min_{\mathbf{c}} E\left\{\left\| x(k-d) - \mathbf{c}^H \mathbf{v} \right\|^2\right\} \qquad (0.4)$$

where we define

$$\mathbf{c} \underline{\triangleq} \left[ \mathbf{f}_0^H, \mathbf{f}_1^H, \ldots, \mathbf{f}_{FF-1}^H, -b_{-d}^*, \cdots, -b_{-1}^*, \cdots, -b_{FB}^* \right]^T \qquad (0.5)$$

$$\mathbf{v} \underline{\triangleq} \left[ \mathbf{r}(k), \ldots, \mathbf{r}(k-FF+1), x(k), \ldots, x(k-d+1), x(k-d-1), \ldots, x(k-d-FB) \right]^T \quad (0.6)$$

where **c** are the current or initial taps of the feedforward and feedback filters 24 and 28; and **v** is vector of the inputs to the feedforward and feedback filters 24 and 28. The solution obtained via the Orthogonality Principle is,

$$\mathbf{f} = \left[ \Omega - \frac{1}{\sigma_x^2} \mathbf{X}\mathbf{X}^H \right]^{-1} \mathbf{h} \qquad (0.7)$$

$$\mathbf{b} = \frac{1}{\sigma_x^2} \mathbf{X}^H \mathbf{f} \tag{0.8}$$

$$\mathbf{X} = \sigma_x^2 \begin{bmatrix} \mathbf{h_0} & \mathbf{h_1} & \cdots & \mathbf{h}_{d-1} & \mathbf{h}_{d+1} & \cdots & \mathbf{h}_{d+FB} \\ 0 & \mathbf{h_0} & & \vdots & \mathbf{h}_d & & \mathbf{h}_{d+FB-1} \\ \vdots & \ddots & \ddots & \vdots & \vdots & & \vdots \\ 0 & \cdots & 0 & \mathbf{h_0} & \mathbf{h}_{d-FF+2} & \cdots & \mathbf{h}_{d+FB-FF+1} \end{bmatrix} \tag{0.9}$$

$$\Omega = \sigma_x^2 \Gamma(h) \Gamma(h)^H + \sigma_n^2 \mathbf{R}_p \tag{1.10}$$

where $\sigma_x$ is the signal power; $\sigma_n$ is the noise power; **h** is the complex numbers representing the channel impulse response at delay L;
and $R_p$ is the covariance matrix of the received signal,

$$\mathbf{R}_p \triangleq E\{\mathbf{rr}^H\} \tag{0.10}$$

Each conditional-mean estimator 18 is,

$$\hat{s}_{opt} = E\{s \mid r\} = \sum_{\forall s_i} s \, p(s_i \mid r) = \sum_{\forall s_i} d_i \frac{p(r \mid s_i) \Pr(s_i)}{p(r)} \tag{1.11}$$

where s is the symbol being estimated; $\forall s_i$ represents the alphabet of possible symbols; r is the output of the accumulator 16; and $p(r/s_i)$ is the likelihood of r; and $p(r) = \sum_{\forall s_i} p(r/s_i)$. Given the likelihood for the complex scalar $r$, the correlator output is,

$$p(r \mid s_i) = \frac{1}{\pi \sigma_n^2} \exp\left(-|r - g s_i|^2 / \sigma_n^2\right) \tag{1.12}$$

where $g$ is a gain factor that depends on the linear equalizer gain. For example, in an exemplary embodiment, $g$ is set equal to the spreading gain. For the case of QPSK with symbol alphabet $d_i = (\pm 1 \pm j)/\sqrt{2}$ we find that the estimator is,

$$\hat{d}_{opt} = \frac{1}{\sqrt{2}} \tanh\left(\sqrt{2}\,\frac{\mathrm{Re}(g^{\bullet}r)}{\sigma_n^2}\right) + \frac{j}{\sqrt{2}} \tanh\left(\sqrt{2}\,\frac{\mathrm{Im}(g^{\bullet}r)}{\sigma_n^2}\right) \qquad (1.13)$$

Similar expressions may be found for the case of 8-PSK, 16-QAM, etc.

In one embodiment, a controller (not shown) at the receiver makes and receives measurements to produce the variables used in the above-described equations to generate the taps for the feedback filter 24, the taps for the feedforward filter 28, and to produce the variables used by estimators 18 in generating the symbol estimate $s_{opt}$. Because the variables in the equations above are well-known and the measurements required to produce these variables are well-known, these processes will not be described in detail. For example, the received signal is known when the transmitter sends pilot signals, and on this basis, the signal power, noise power, etc., may be derived.

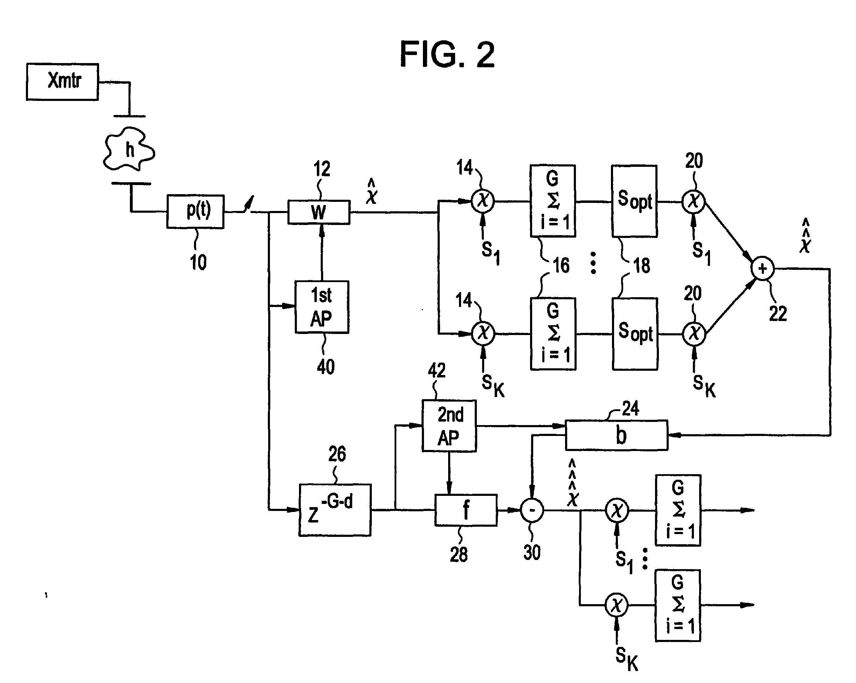

Fig. 2 illustrates another embodiment of the present invention in which the taps of the linear equalizer 12 are determined by a first adaptive processor 40 and the taps of the feedforward filter 28 and feedback filter 24 are determined by a second adaptive processor 42. The first and second adaptive processors 40 and 42 use an adaptive algorithm to determine the tap weights, [**w**,**f**,**b**]. This may be done using the standard LMS (Least Mean Square), RLS (Recursive Least Squares), chip-level, symbol-level, etc. algorithms that are well-known in the art. For example, the taps of the feedforward and feedback filters 24 and 28 may be determined by LMS according to the following expression:

$$\mathbf{c}_{k+1} = \mathbf{c}_k + \mu\mathbf{v}_k\,(x_{pilot}(k-d) - \mathbf{c}_k^H \mathbf{v})^{\bullet}$$

As discussed above, the "reference" signal used for the adaptive algorithm may be CDMA pilot codes $x_{pilot}$, ordinary training symbols, or the CDMA pilot code(s) combined with partial knowledge of the traffic-bearing signals. If this partial knowledge is not used, then an additional correlator for the pilot channel is useful to eliminate noise from the error signal. Alternatively, so-called "blind" or "semi-blind"estimation algorithms may be used.

The above-described embodiments were directed to SISO (single input, single output) systems. However, the present invention is not limited to SISO systems, but is applicable to other types of systems such as MIMO (multiple input, multiple output) and transmit diversity systems.

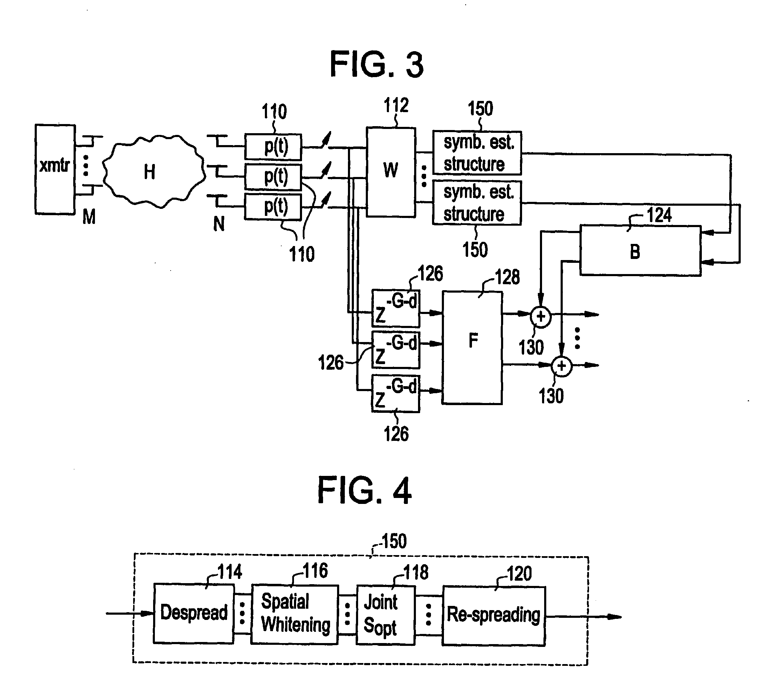

Fig. 3 illustrates an embodiment of a MIMO system according to the present invention. The MIMO system is shown as having M transmit antennas and N receive antennas. The receiver processing structure shown in Fig. 3 is analogous to that of Fig. 1, except that because of the multiple multipath channels, the linear equalizer and filters in the MIMO system are matrix based.

Specifically, Fig. 3 shows samplers 110 each sampling the chips of a signal received by one the N receive antennas to generate a received signal. In one exemplary embodiment, the samplers 110 oversample the chips such that at least two samples per chip are obtained. A matrix linear equalizer 112 processes the received signals to produce linear equalized signals. The linear equalization performed by the matrix linear equalizer is conducted according to any well-known matrix linear equalization algorithm. The linear equalized signals are each received by a symbol estimation structure 150. Fig. 4 illustrates an embodiment of the symbol estimation structure. As shown, a despreader 114 despreads the linear equalized signal by mixing the linear equalized signal with the respective spreading codes $s_1, ..., s_k$ using mixers. A spatial whitening unit 116 transforms the remaining interference and noise so that its spatial covariance is equal to the identity matrix in any well-known manner, such as disclosed in U.S. Patent Application Publication No. US 2004139137 entitled METHOD AND APPARATUS FOR DETERMINING AN INVERSE SQUARE ROOT OF A GIVEN POSITIVE-DEFINITE HERMITIAN MATRIX, filed 01/10/2003.

A joint symbol estimator 118 performs a simultaneous non-linear, soft-estimation of M symbols in the output stream from the spectral whitening unit 116. For example, a near-maximum likelihood processing with hard or soft outputs, such as the sphere decoding algorithm, may be performed by the joint symbol estimator 118. Alternatively, the so-called "V-Blast" subtractive type process may be employed. The following is a further example of an estimation process performed by the joint symbol estimator 118 corresponding to the conditional-mean estimator for the vector of M symbols:

$$\hat{s}_{opt} = E\{s \mid \mathbf{r}\} = \sum_{\forall s_i \in C^M} s\, p(s_i \mid \mathbf{r}) = \sum_{\forall s_i \in C^M} s_i \frac{p(\mathbf{r} \mid s_i)\mathrm{Pr}(s_i)}{p(\mathbf{r})}$$

where,

$$p(\mathbf{r} \mid s_i) = \frac{1}{\pi\,\sigma_n^2}\exp\left(-\left\|\mathbf{r} - \hat{\mathbf{H}}s_i\right\|^2 / \sigma_n^2\right)$$

and where $C^M$ represents an M-dimensional vector of possible constellation points.

The soft symbol values are then re-spread and contributions from the K codes are summed by the re-spreader 120. The result is an estimation of the chips transmitted by each of the M sources. These are now used in matrix feedback filter 124 in Fig. 3, which subtracts out same-antenna chip interference as well as other-antenna chip interference when the output thereof is combined with the output from the matrix feedforward filter 28 by adders 130. The matrix feedforward filter 128 again has a delayed input because of delays 126 -- one for each received signal. In one embodiment, a two-sided feedback filter 124 is used (to subtract past as well as future chips), while in another embodiment, the filter 124 is one-sided. The outputs from the adders 130 are then despread, and whitened detected for each spreading code.

The filters associated with this embodiment of the present invention are matrix filters, [**W,F,B**]. The matrix feedback and feedforward filters 124 and 128 can be computed as follows, where the estimate of a chip from the m-th transmitter is,

$$\hat{x}_m(k-d) = \sum_{n=1}^{N}\sum_{i=0}^{FF-1} \mathbf{f}_{m,n}^T \mathbf{r}_n(k-i) - \sum_{m'=1}^{M}\sum_{j=1}^{FB} b_{m,m'}(j)\, x_m(k-d-j) - \sum_{m'=1}^{M}\sum_{q=1}^{d} b_{m,m'}(-q)\, x_m(k-d+q)$$

where all the received spatial signals are utilized, and the feedback will subtract out all potential cross-couplings between transmitters (past and future). We now solve,

$$\mathbf{c}_{opt} = \arg\min_{\mathbf{c}} E\left\{\left\|\mathbf{x}(k-d) - \mathbf{c}^H \mathbf{g}\right\|^2\right\} \qquad (1.14)$$

where we have defined,

$$\mathbf{x}(k-d) \triangleq \begin{bmatrix} x_1(k-d) \\ \vdots \\ x_M(k-d) \end{bmatrix}, \quad \mathbf{g} \triangleq \begin{bmatrix} \mathbf{r} \\ \tilde{\mathbf{x}} \end{bmatrix}, \quad \mathbf{c} \triangleq \begin{bmatrix} \mathbf{F} \\ -\mathbf{B} \end{bmatrix}$$

$$\mathbf{r} = \begin{bmatrix} \mathbf{r}_1 \\ \vdots \\ \mathbf{r}_N \end{bmatrix}, \quad \tilde{\mathbf{x}} = \begin{bmatrix} \tilde{\mathbf{x}}_1 \\ \vdots \\ \tilde{\mathbf{x}}_M \end{bmatrix}, \quad \mathbf{F} = \begin{bmatrix} \mathbf{f}_{1,1} & \cdots & \mathbf{f}_{M,1} \\ \vdots & & \vdots \\ \mathbf{f}_{1,N} & \cdots & \mathbf{f}_{M,N} \end{bmatrix}, \quad \mathbf{B} = \begin{bmatrix} \mathbf{b}_{1,1} & \cdots & \mathbf{b}_{M,1} \\ \vdots & & \vdots \\ \mathbf{b}_{1,M} & \cdots & \mathbf{b}_{M,M} \end{bmatrix} \qquad (1.15)$$

$$\mathbf{r}_n = \left[ \mathbf{r}_n(k)^T, \mathbf{r}_n(k-1)^T, \cdots, \mathbf{r}_n(k-FF+1)^T \right]^T$$

$$\tilde{\mathbf{x}}_m = \left[ x_m(k), \cdots, x_m(k-d+1), x_m(k-d-1), \cdots, x_m(k-d-FB) \right]^T$$

The solution is again obtained from the Orthogonality Principle,

$$\mathbf{B} = \frac{1}{\sigma_x^2} \mathbf{X}^H \mathbf{F}$$

$$\mathbf{F} = \left( \mathbf{\Omega} - \frac{1}{\sigma_x^2} \mathbf{X} \mathbf{X}^H \right)^{-1} \mathbf{\Theta} \qquad (1.16)$$

where we defined,

$$\mathbf{\Omega} \triangleq \sigma_x^2 \mathbf{\Gamma}(\mathbf{H}) \mathbf{\Gamma}(\mathbf{H}) + \sigma_n^2 \mathbf{R}_p, \quad \mathbf{\Phi} \triangleq \sigma_x^2 \mathbf{I}_{M(FB+d)} \qquad (1.17)$$

$$\mathbf{X} \triangleq \begin{bmatrix} \mathbf{X}_{1,1} & \cdots & \mathbf{X}_{1,M} \\ \vdots & & \vdots \\ \mathbf{X}_{N,1} & \cdots & \mathbf{X}_{N,M} \end{bmatrix} \qquad (1.18)$$

$$\mathbf{X}_{n,m} = \sigma_x^2 \begin{bmatrix} \mathbf{h}_{n,m}(0) & \mathbf{h}_{n,m}(1) & \cdots & \mathbf{h}_{n,m}(d-1) & \mathbf{h}_{m,n}(d+1) & \cdots & \mathbf{h}_{m,n}(d+FB) \\ 0 & \mathbf{h}_{m,n}(0) & & \vdots & \mathbf{h}_{m,n}(d) & & \mathbf{h}_{m,n}(d+FB-1) \\ \vdots & \ddots & \ddots & \vdots & \vdots & & \vdots \\ 0 & \cdots & 0 & \mathbf{h}_{m,n}(0) & \mathbf{h}_{m,n}(d-FF+2) & \cdots & \mathbf{h}_{m,n}(d+FB-FF+1) \end{bmatrix}$$

$$(1.19)$$

$$\Theta \triangleq \begin{bmatrix} \varphi_{1,1} & \cdots & \varphi_{1,M} \\ \vdots & & \vdots \\ \varphi_{N,1} & \cdots & \varphi_{N,M} \end{bmatrix}, \quad \varphi_{n,m} = \sigma_x^2 \Gamma(\mathbf{h}_{n,m}) \mathbf{e}_d \qquad (1.20)$$

where ed is a vector with all zeros except for a single 1 in the dth position.

As with the embodiment of Fig. 1, the closed-form solution 1.16 may be computed directly, or alternatively the implementation may be used based on adaptive filtering (LMS, RLS, etc.), using unique training or pilot signals from the various transmit antennas such as described with respect to Fig. 2.

Transmit diversity systems use multiple transmit antennas and one or more receive antennas to send a single data stream (unlike MIMO). The transmit diversity scheme can be defined by an encoder and a decoder. For example, in UMTS the open loop transmit diversity scheme (STTD) with two antennas, two symbols at a time are encoded. The encoder sends $\left[ x_1, -x_2^* \right]$ to antenna 1 and $\left[ x_2, x_1^* \right]$ to antenna 2 in two consecutive time slots. The decoder then forms two combinations of the received signals, $\hat{x}_1 = h_1^* r_1 + h_2 r_2^*$ and $\hat{x}_2 = h_2^* r_1 - h_1 r_2^*$. This typical operation of transmit diversity assumes that the radio channel was not time-dispersive.

To correct for time-dispersion, it is possible to use the linear equalizer, as seen in Fig. 3. The system should have at least as many receive antennas as transmit antennas for good performance. The number of equalizer outputs will be equal to the number of transmit antennas. This linear equalizer is identical to the one described previously for MIMO systems.

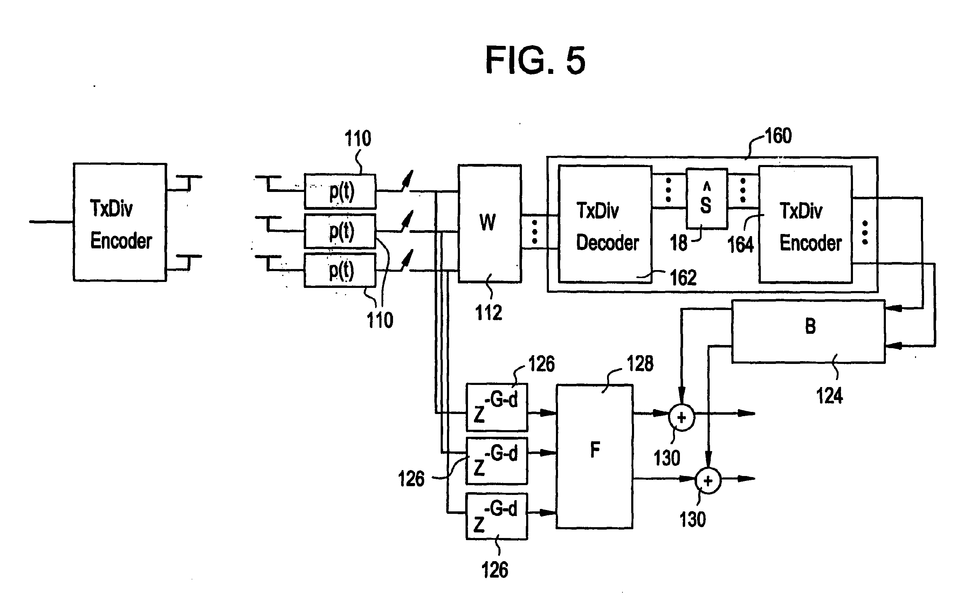

Fig. 5 illustrates an embodiment of the receiver processing structure according to the present invention for a transmit diversity system. As shown, the receiver processing structure is the same as that illustrated in Fig. 3, except that the symbol estimator structures 150 shown in Fig. 3 have been replaced with a symbol estimation structure 160. Accordingly, only these differences will be described for the sake of brevity. As shown, the linear equalizer is followed by a transmit diversity decoder 162, and the symbol estimators 18. The symbols are then encoded by a transmit diversity encoder 164, giving a reconstituted chip stream. If other signals are also present in the downlink, they should also be reconstructed, and their chips summed together to give the total transmit streams. These are used in the feedback and feedforward filters 124 and 128, as described previously. At the output of the adders 130, a transmit diversity decoder may be used again, and receiver processing continues in the normal fashion (FEC decoding, etc.)

The invention being thus described, it will be obvious that the same may be varied in many ways. For example, while aspects of the present invention may have been described with respect to receiver processing of downlink CDMA signals, the present invention is equally applicable to the uplink if, for example, orthogonal uplink signals are sent. Such variations are not to be regarded as a departure from the scope of the invention, and all such modifications are intended to be included within the scope of the present invention.

**Claims**

1. A method for receiver processing of CDMA signals, comprising:

performing linear equalization on at least one received signal to generate at least one linear equalized signal;
despreading each linear equalized signal to generate one or more signal streams associated with each linear equalized signal;
estimating symbols in each signal stream to generate associated symbol estimate signal streams;
respreading the symbol estimate signal streams associated with each linear equalized signal to generate a composite signal associated with each linear equalized signal;
delaying and filtering the received signal in a first filter (28);
filtering the composite signal in a second filter (24) to generate an output representing an influence of at least one of past and future chips on a current chip in the filtered received signal; and
combining the filtered received signal with the filtered composite signal to produce an estimate of the current chip with the influence of at least one of the past and future chips on the current chip being suppressed.

**2.** The method of claim 1, wherein the estimating step comprises performing a non-linear soft-decision estimation of symbols in each signal stream.

**3.** The method of claim 1, wherein
the filtering the composite signal step generates an output representing an influence of the past chips on a current chip in the filtered received signal; and
the combining step consists of substracting the output of the filtering the composite signal step from the filtered received signal.

**4.** The method of claim 3, wherein the filtering the composite signal step generates an output representing an influence of past and future chips on a current chip in the filtered received signal.

**5.** The method of claim 1, wherein
the filtering the composite signal step generates output representing an influence of the future chips on a current chip in the filtered received signal; and
the combining step consists of substracting the output of the filtering the composite signal step from the filtered received signal.

**6.** The method of claim 1, further comprising :

   generating filter taps for the first and second filters (24, 28) used for filtering the received signal and filtering the composite signal.

**7.** The method of claim 6, wherein the generating filter taps step adaptively generates the filter taps for the first and second filters (24, 28).

**8.** The method of claim 1, wherein the despreading step despreads each linear equalized signal into one or more data symbol streams.

**9.** The method of claim 1, wherein at least one received signal includes symbols for more than one user.

**10.** The method of claim 1, wherein each received signal is associated with a signal received by a different antenna (110).


**Patentansprüche**

**1.** Verfahren zum Empfängerverarbeiten von CDMA-Signalen, umfassend:

   Ausführen linearen Entzerrens an mindestens einem empfangenen Signal, um mindestens ein linear entzerrtes Signal zu erzeugen,
   Entspreizen jedes linear entzerrten Signals, um einen oder mehrere Signalströme zu erzeugen, die mit jedem linearen entzerrten Signal verbunden sind,
   Schätzen von Symbolen in jedem Signalstrom, um dazugehörende Symbolschätzungssignalströme zu erzeugen,
   Neuspreizen der Symbolschätzungssignalströme, die zu jedem linear entzerrten Signal gehören, um ein Kompositsignal zu erzeugen, das zu jedem linearen entzerrten Signal gehört,
   Verzögern und Filtern des empfangenen Signals in einem ersten Filter (28),
   Filtern des Kompositsignals in einem zweiten Filter (24), um einen Ausgang zu erzeugen, der einen Einfluss mindestens eines vergangener oder zukünftiger Chips auf einen aktuellen Chip in dem gefilterten empfangenen Signal darstellt, und
   Kombinieren des gefilterten empfangenen Signals mit dem gefilterten Kompositsignal, um eine Schätzung des aktuellen Chips zu erzeugen, wobei der Einfluss mindestens eines der vergangenen und zukünftigen Chips auf den aktuellen Chip unterdrückt wird.

**2.** Verfahren nach Anspruch 1, wobei der Schritt des Schätzens das Ausführen einer nicht linearen Soft-Beschlussschätzung von Symbolen in jedem Signalstrom aufweist.

**3.** Verfahren nach Anspruch 1, wobei

der Schritt des Filterns des Kompositsignals einen Ausgang erzeugt, der einen Einfluss der vergangenen Chips auf einen aktuellen Chip in dem gefilterten empfangenen Signal darstellt, und

der Schritt des Kombinierens aus dem Subtrahieren des Ausgangs des Schritts des Filterns des Kompositsignals von dem gefilterten empfangenen Signal besteht.

**4.** Verfahren nach Anspruch 3, wobei der Schritt des Filterns des Kompositsignals einen Ausgang erzeugt, der einen Einfluss vergangener und zukünftiger Chips auf einen aktuellen Chip in dem gefilterten empfangenen Signal erzeugt.

**5.** Verfahren nach Anspruch 1, wobei

der Schritt des Filterns einen Ausgang erzeugt, der einen Einfluss zukünftiger Chips auf einen aktuellen Chip in dem gefilterten empfangenen Signal darstellt, und

der Schritt des Kombinierens aus dem Subtrahieren des Ausgangs des Schritts des Filterns des Kompositsignals von dem gefilterten empfangenen Signal besteht.

**6.** Verfahren nach Anspruch 1, das ferner aufweist:

Erzeugen von Filterabgriffen für das erste und das zweite Filter (24, 28), die zum Filtern des empfangenen Signals und Filtern des Kompositsignals verwendet werden.

**7.** Verfahren nach Anspruch 6, wobei der Schritt des Erzeugens von Filterabgriffen anpassend die Filterabgriffe für das erste und das zweite Filter (24, 28) erzeugt.

**8.** Verfahren nach Anspruch 1, wobei der Schritt des Entspreizens jedes linear entzerrte Signal in einen oder mehrere Datensymbolströme entspreizt.

**9.** Verfahren nach Anspruch 1, wobei mindestens ein empfangenes Signal Symbole für mehr als einen Benutzer enthält.

**10.** Verfahren nach Anspruch 1, wobei jedes empfangene Signal mit einem Signal verbunden ist, das von einer anderen Antenne (110) empfangen wird.

## Revendications

**1.** Procédé de traitement de réception de signaux AMDC, comprenant :

l'exécution d'une égalisation linéaire sur au moins un signal reçu afin de générer au moins un signal égalisé linéaire ;

le désétalement de chaque signal égalisé linéaire afin de générer un ou plusieurs trains de signal associés à chaque signal égalisé linéaire ;

l'estimation de symboles dans chaque train de signal pour générer des trains de signal à estimation de symboles associée ;

le réétalement des trains de signal à estimation de symboles associée avec chaque signal égalisé linéaire pour générer un signal composite associé à chaque signal égalisé linéaire ;

le retard et le filtrage du signal reçu dans un premier filtre (28) ;

le filtrage du signal composite dans un second filtre (24) pour générer une sortie représentant une influence d'au moins l'une de bribes passées et futures sur une bribe actuelle dans le signal reçu filtré ; et

la combinaison du signal reçu filtré avec le signal composite filtré pour produire une estimation de la bribe actuelle, l'influence d'au moins l'une des bribes passées et futures sur la bribe actuelle étant supprimée.

**2.** Procédé selon la revendication 1, dans lequel l'étape d'estimation comprend l'exécution d'une estimation de décision souple non linéaire de symboles dans chaque train de signal.

**3.** Procédé selon la revendication 1, dans lequel

l'étape de filtrage du signal composite génère une sortie représentant une influence des bribes passées sur une bribe actuelle dans le signal reçu filtré; et

l'étape de combinaison consiste en la soustraction de la sortie de l'étape de filtrage du signal composite du signal reçu filtré.

4. Procédé selon la revendication 3, dans lequel l'étape de filtrage du signal composite génère une sortie représentant une influence de bribes passées et futures sur une bribe actuelle dans le signal reçu filtré.

5. Procédé selon la revendication 1, dans lequel l'étape de filtrage du signal composite génère une sortie représentant une influence des bribes futures sur une bribe actuelle dans le signal reçu filtré ; et
l'étape de combinaison consiste en la soustraction de la sortie de l'étape de filtrage du signal composite du signal reçu filtré.

6. Procédé selon la revendication 1, comprenant en outre :

la génération de prises de filtre pour les premier et second filtres (24, 28) utilisés pour filtrer le signal reçu et filtrer le signal composite.

7. Procédé selon la revendication 6, dans lequel l'étape de génération de prises de filtre génère de façon adaptative les prises de filtre des premier et second filtres (24, 28).

8. Procédé selon la revendication 1, dans lequel l'étape de désétalement désétale chaque signal égalisé linéaire en un ou plusieurs trains de symboles de données.

9. Procédé selon la revendication 1, dans lequel au moins un signal reçu comporte des symboles pour plus d'un utilisateur.

10. Procédé selon la revendication 1, dans lequel chaque signal reçu est associé à un signal reçu par une antenne différente (110).

EP 1 530 300 B1

# FIG. 1

FIG. 2

EP 1 530 300 B1

# FIG. 3

# FIG. 4

EP 1 530 300 B1

# FIG. 5

EP 1 530 300 B1